# FASCICULE DE BREVET EUROPEEN

(11) **EP 2 502 211 B1**
(45) Date de publication et mention de la délivrance du brevet: **02.01.2019**
(21) Numéro de dépôt: 10793002.6
(22) Date de dépôt: 17.11.2010
(51) Int. Cl.: G07D 7/20, G07D 7/202, G06K 9/00, G06K 9/36

(54) **PROCEDE ET SYSTEME DE CONTROLE AUTOMATIQUE DE L'AUTHENTICITE D'UN DOCUMENT D'IDENTITE.**
VERFAHREN UND SYSTEM ZUR AUTOMATISCHEN ÜBERPRÜFUNG DER AUTHENTIZITÄT EINES AUSWEISDOKUMENTS
METHOD AND SYSTEM FOR AUTOMATICALLY CHECKING THE AUTHENTICITY OF AN IDENTITY DOCUMENT

(30) Priorité: 17.11.2009 FR 0958109
(43) Date de publication de la demande: 26.09.2012
(73) Titulaire: Hologram Industries, 77607 Marne La Vallee Cedex (FR)
(72) Inventeur: MANDRIDAKE, Clarisse, F-91190 Gif-sur-Yvette (FR); LE LIBOUX, Kristen, F-75001 Paris (FR); KERISIT, Jean-Marc, F-92400 Courbevoie (FR)
(74) Mandataire: Desormiere, Pierre-Louis
(86) Numéro de dépôt international: PCT/FR2010/052439
(87) Numéro de publication internationale: WO 2011/061442

(56) Documents cités:
- EP-A1- 0 640 946
- WO-A1-2008/014589
- JP-A- 2008 102 757
- KR-A- 20020 013 035
- US-A1- 2003 108 373

## Description

La présente invention a pour objet un procédé et un système de contrôle automatique de l'authenticité d'un document d'identité comprenant au moins une première zone de données textuelles variables et une deuxième zone d'images.

Dans le cadre de la lutte anti-contrefaçon et contre la falsification des documents d'identité, il existe un besoin de pouvoir détecter sur le terrain de façon fiable et rapide un document d'identité falsifié, tel que par exemple un passeport, une carte d'identité ou un permis de conduire.

Un document d'identité comprend d'une part des éléments fixes préétablis pour des titres vierges (mentions imprimées, images, hologrammes, logos, filigranes,...) et des données propres au titulaire du document d'identité (mentions textuelles variables, images telles que la photographie d'identité d'un visage, zone d'informations lisibles par machine dite MRZ).

On connaît déjà de nombreuses techniques visant à sécuriser des documents d'identité et ainsi à réduire le risque de falsification.

Des documents d'identité peuvent ainsi être soumis à un tatouage numérique (en anglais "watermarking").

Selon une autre approche, il est mis en oeuvre une technologie de reconnaissance de caractères pour repérer des données contenues dans la zone MRZ d'un document d'identité qui comprend des informations lisibles par machine.

D'autres techniques s'intéressent aux éléments graphiques et notamment à la biométrie et à la reconnaissance du visage à partir d'une photo d'identité.

Les systèmes de sécurité peuvent incorporer plusieurs techniques et utiliser par exemple des éléments graphiques visibles uniquement par ultraviolet ou infrarouge.
Le document KR20020013035 décrit un système de validation de passeports qui utilise la reconnaissance visuelle et la reconnaissance de caractères pour valider le passeport, le texte et l'image du passeport étant comparés aux informations associées dans une base de données. Le document JP2008102757 décrit un système de réservation d'hôtel qui lit les informations sur le passeport du client, extrait les informations relatives aux données et à l'image du client et les compare aux réservations enregistrées.
Le document WO2008014589 décrit un procédé et un appareil permettant de comparer les caractéristiques générales (ou génériques ou communes à une famille de document) au moyen de la capture d'une image d'un document, de l'extraction d'identité, ni de l'ensemble d'une base de données de référence pour des questions de confidentialité.

La présente invention vise à remédier aux inconvénients précités et à permettre de contrôler automatiquement in situ l'authenticité d'un document d'identité sans qu'il soit nécessaire de disposer d'un équipement coûteux et encombrant, ni d'avoir sur place l'ensemble d'une base de données nominatives qui risquerait d'être violée.

La présente invention vise à permettre la détection aisée, rapide et fiable de différentes opérations frauduleuses pouvant être mises en oeuvre sur les documents d'identité telles que la modification des données variables d'un titre délivré, la falsification de titres vierges volés, la contrefaçon, c'est-à-dire l'imitation d'un titre officiel.

Ces buts sont atteints, conformément à l'invention, grâce à un procédé de contrôle automatique de l'authenticité d'un document d'identité comprenant au moins une première zone de données textuelles variables et au moins une deuxième zone d'images, caractérisé en ce qu'il comprend les étapes revendiquées dans la revendication 1.

Avantageusement, la phase de contrôle délocalisé comprend en outre une étape consistant à vérifier la qualité des données du document numérisé et à émettre un message d'erreur en cas de qualité insuffisante de ces données numérisées.

Dans le cas où le procédé est appliqué au contrôle automatique de l'authenticité d'un document d'identité comprenant en outre une troisième zone d'informations lisibles par machine, la phase de contrôle délocalisé des documents d'identité comprend en outre une étape consistant à extraire et interpréter à l'aide d'un procédé de reconnaissance optique de caractères les données contenues dans une troisième zone d'informations lisibles par machine du document d'identité à contrôler et émettre un message d'erreur en cas d'erreur de lecture de cette troisième zone.

Le procédé peut alors comprendre en outre une étape de vérification de la cohérence des données textuelles variables extraites de la première zone du document d'identité à contrôler et des données extraites de la troisième zone d'informations lisibles par machine du document d'identité à contrôler.

Selon un aspect de l'invention, lors de l'étape b3) d'extraction des informations graphiques d'une image de la deuxième zone du document d'identité à contrôler, on effectue un prétraitement comprenant des opérations de filtrage visant à nettoyer l'image des bruits parasites introduits lors de l'étape de numérisation du document d'identité à contrôler.

De même, lors de l'étape b2 d'extraction des données textuelles variables de la première zone du document d'identité à contrôler, on effectue un prétraitement visant à corriger les défauts introduits lors de l'étape de numérisation du document d'identité à contrôler ou inhérents à un vieillissement naturel de ce document.

Selon un mode particulier de réalisation, lors de l'étape d'extraction des informations graphiques de l'image de la deuxième zone du document d'identité à contrôler, on calcule les moments de Zernike d'ordre supérieur de l'image gradient entière afin d'obtenir un descripteur global des informations graphiques pour créer ladite composante globale d'empreinte.

Avantageusement, lors de l'étape d'extraction des informations graphiques de l'image de la deuxième zone du document d'identité à contrôler, la binarisation de l'image destinée à être subdivisée en un nombre prédéterminé N de blocs avec recouvrement de dimension fixe comprend un premier niveau de traitement par une détection de contours multi-échelles et un deuxième niveau de traitement par un seuillage adaptatif.

Dans ce cas, de préférence, les composantes locales d'empreintes sont obtenues par le calcul de descripteurs de forme sur les N blocs de l'image binarisée avec un ordre supérieur ou égal à 12.

Selon un premier mode de réalisation possible, l'étape b1) de numérisation d'un document d'identité à contrôler est effectuée dans un poste de contrôle distinct du serveur central et le document numérisé audit poste de contrôle est transmis au serveur central par des moyens de télécommunication.

Selon un autre mode de réalisation possible, l'étape b1) de numérisation d'un document d'identité à contrôler est effectuée dans un poste de contrôle distinct du serveur central, les étapes de création d'une empreinte du document d'identité à contrôler sont effectuées au niveau du poste de contrôle et l'empreinte du document d'identité à contrôler est transmise au serveur central par des moyens de télécommunication.

L'invention concerne également un système de contrôle automatique de l'authenticité d'un document d'identité comprenant au moins une première zone de données textuelles variables et une deuxième zone d'images, caractérisé en ce qu'il comprend les caractéristiques revendiquées dans la revendication 12.

Avantageusement, le système comprend en outre une unité de vérification de la qualité des données du document numérisé et d'émission d'un message d'erreur en cas de qualité insuffisante de ces données numérisées.

Dans le cas où le système est appliqué au contrôle automatique de l'authenticité d'un document d'identité comprenant en outre au moins une troisième zone d'informations lisibles par machine, le module de contrôle délocalisé comprend en outre une unité de vérification pour extraire et interpréter à l'aide d'un procédé de reconnaissance optique de caractères des données contenues dans une troisième zone d'informations lisibles par machine du document d'identité à contrôler et pour émettre un message d'erreur en cas d'erreur de lecture de cette troisième zone.

Dans un tel système, l'unité de vérification peut comprendre en outre des moyens pour vérifier la cohérence des données textuelles variables extraites de la première zone du document d'identité à contrôler et des données extraites de la troisième zone d'informations lisibles par machine du document d'identité à contrôler.

Selon un mode particulier de réalisation, ladite quatrième unité d'extraction des informations graphiques de l'image de la deuxième zone du document d'identité à contrôler comprend une unité de prétraitement pour effectuer des opérations de filtrage visant à nettoyer l'image des bruits parasites introduits lors de la numérisation du document d'identité à contrôler.

De même, selon un autre aspect de l'invention, ladite troisième unité d'extraction des données textuelles variables de la première zone du document d'identité à contrôler comprend une unité de prétraitement comprenant des moyens de correction des défauts introduits lors de l'étape de numérisation du document d'identité à contrôler ou inhérents à un vieillissement naturel de ce document.

Selon un mode de réalisation possible, lesdites troisième et quatrième unités sont situées au niveau d'un poste de saisie d'un document d'identité à contrôler et ledit module de contrôle délocalisé comprend une interface de connexion Internet pour communiquer avec ledit serveur central comprenant une unité de réception de l'empreinte du document d'identité à contrôler, ladite base de données d'empreintes, ladite unité de comparaison et ladite unité de renvoi de message.

Selon un autre mode de réalisation possible, lesdites troisième et quatrième unités sont situées au niveau dudit serveur central et ledit module de contrôle délocalisé comprend une interface de connexion Internet pour transmettre le document à contrôler numérisé audit serveur central comprenant lesdites troisième et quatrième unités permettant la création de l'empreinte du document d'identité à contrôler numérisé, ladite base de données d'empreintes, ladite unité de comparaison et ladite unité de renvoi de message.

Selon encore un autre mode de réalisation possible, ledit serveur central comprenant lesdites troisième et quatrième unités permettant la création de l'empreinte du document d'identité à contrôler numérisé, ladite base de données d'empreintes, ladite unité de comparaison et ladite unité de renvoi de message est situé géographiquement au niveau d'un poste de saisie d'un document d'identité à contrôler et délocalisé par rapport à ladite base de données primaire.

D'autres caractéristiques et avantages de l'invention ressortiront de la description suivante de modes particuliers de réalisation, donnés à titre d'exemples, en référence aux dessins annexés, sur lesquels :
- la Figure 1 est un schéma-bloc montrant un système d'acquisition de données utilisable dans le cadre de la présente invention,
- la Figure 2 est un schéma-bloc d'un premier mode de réalisation d'un module de contrôle utilisable dans le cadre de la présente invention,
- la Figure 3 est un schéma-bloc d'un deuxième mode de réalisation d'un module de contrôle utilisable dans le cadre de la présente invention,
- la Figure 4 montre un exemple de document d'identité avec l'extraction d'attributs discriminants selon l'invention,
- la Figure 5 est un schéma montrant un exemple de processus de calcul d'empreinte applicable à la présente invention,
- la Figure 6 est un exemple d'interface utilisateur d'un module de contrôle d'un système de contrôle automatique selon l'invention,
- la Figure 7 est un exemple d'interface analogue à celle de la Figure 6 montrant le cas d'un document authentifié,
- la Figure 8 est un exemple d'interface analogue à celle de la Figure 6, montrant le cas d'un document falsifié avec une photo non valide, et
- la Figure 9 est un exemple d'interface analogue à celle de la Figure 6, montrant le cas d'un document présentant des données textuelles incorrectes.

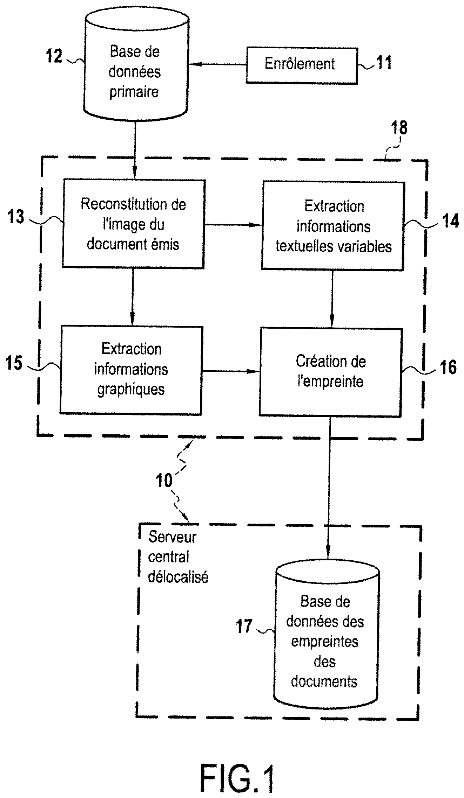

La Figure 1 montre le schéma d'un exemple de module d'acquisition de données conforme à l'invention.

Une base de données primaire 12 regroupe l'ensemble des données nominatives relatives à un groupe de titulaires d'un document d'identité donné (passeport, carte d'identité, permis de conduire, carte de séjour,...) et se trouve localisée auprès de l'organisme chargé de la fabrication des documents d'identité (Ministère, Préfecture,...).

Selon une première possibilité, la base de données primaire 12 est constituée au fur et à mesure de la création de nouveaux documents d'identité, lors du processus d'enrôlement 11. Dans ce cas, lors de l'enrôlement d'une personne en vue de la délivrance d'un document d'identité, ses données personnelles : photographie, signature,... sont enregistrées par l'organisme en charge de la fabrication du document. Des caractéristiques spécifiques liées au document (passeport, carte d'identité, carte grise, etc.) et à son origine (organisme, pays, etc.) sont ajoutées à ces données personnelles (logos, lamina, etc.). Ces données de référence sont ensuite stockées dans la base de données primaire 12.

La base de données primaire 12 peut toutefois également être constituée de façon globale à partir des fichiers de référence de documents d'identité préexistants déjà en circulation.

La base de données primaire 12 contient de la même façon diverses informations disponibles concernant les titulaires des documents d'identité (photographie, signature, diverses informations personnelles caractérisables) ainsi que des informations (textes, logos) propres au type de document d'identité concerné.

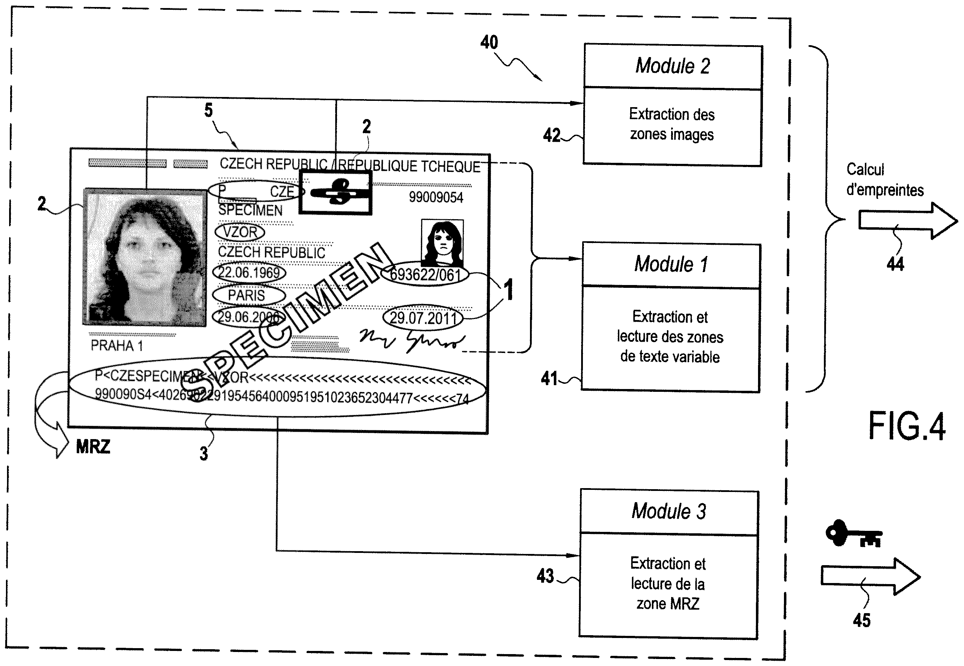

D'une manière générale, la base de données primaires 12, qui contient des données nominatives, comprend au moins des informations contenues dans une ou plusieurs zones 1 de données textuelles variables et dans une ou plusieurs zones 2 d'images de chaque document d'identité à référencer (voir Figure 4).

La Figure 1 montre un module 18 permettant de créer, à partir des données enregistrées dans la base de données primaire 12, une base de données d'empreintes 17 contenant les empreintes des divers documents d'identité pris en compte dans la base de données primaire 12.

Dans la présente description, on dénomme empreinte une signature numérique multicomposantes attribuée à chacun des documents d'identité.

Le module 18 comprend essentiellement une unité 13 pour extraire de la base de données primaire 12 les données relatives à un document d'identité particulier et permettre de reconstituer l'image de ce document, une unité 14 d'extraction de données textuelles variables, une unité 15 d'extraction d'informations graphiques et une unité 16 de création d'une empreinte destinée à être enregistrée dans la base de données d'empreintes 17.

De façon plus particulière, les unités 13, 14, 16 permettent d'extraire de la base de données primaire 12 des données textuelles variables de la première zone 1 de chacun des documents d'identité par un procédé de reconnaissance optique de caractères et d'incorporer ces données textuelles sous une forme codée dans l'empreinte attribuée à chacun des documents d'identité.

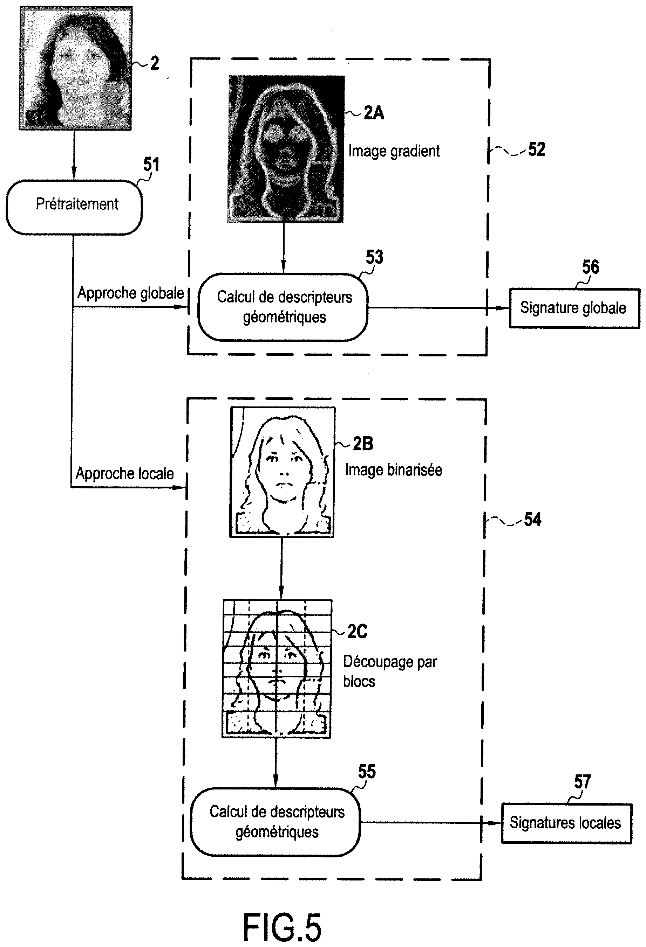

Les unités 13, 15, 16 permettent d'extraire de la base de données primaire 12 des informations graphiques de la deuxième zone 2 de chacun des documents d'identité et de créer au moins une composante globale d'empreinte obtenue à partir de l'image gradient entière et au moins une pluralité de composantes locales d'empreinte obtenues à partir d'un nombre prédéterminé N de blocs correspondant à des subdivisions de l'image binarisée avec recouvrement de dimension fixe, pour chacun des documents d'identité, comme cela sera explicité plus loin en référence à la Figure 5.

L'enregistrement des empreintes des divers documents d'identité est effectué dans la base de données d'empreintes 17 associée à un serveur central 10 délocalisé par rapport à la base de données primaire 12. Les empreintes sont indexées suivant un numéro de référence du document d'identité qui lui est propre.

L'avantage de la base de données d'empreintes 17 réside dans le fait que celle-ci est à la fois moins volumineuse que la base de données primaire 12 et surtout est anonymisée, ce qui permet de la délocaliser par rapport à la base de données primaire 12, avec le serveur central 10 qui comprend également le module 18, sans risque pour la confidentialité. Par ailleurs, le classement des empreintes avec une indexation suivant le numéro de référence du document qui lui est propre permet lors d'une opération de contrôle d'un document qui sera décrite plus bas, de ne faire que des comparaisons entre deux documents, ce qui garantit une très grande rapidité de traitement. Par ailleurs, si l'on compare à des techniques de comparaison de photos, la technique d'utilisation d'empreintes selon l'invention est très avantageuse dans la mesure où une base de données d'empreintes présente un dimensionnement réduit et le poids relatif d'une empreinte est inférieur à celui d'une photo classique.

Le contrôle, délocalisé par rapport à la base de données primaire 12, par exemple à un poste frontière, destiné à détecter si un document d'identité donné 5 est ou non authentique, est effectué au niveau d'un poste de saisie de documents 21 où, après la vérification des éléments de sécurité visuels de premier niveau du document d'identité, un contrôleur, s'il a un doute quant à l'authenticité du document, peut faire appel au système selon l'invention pour une vérification électronique de la validité du document.

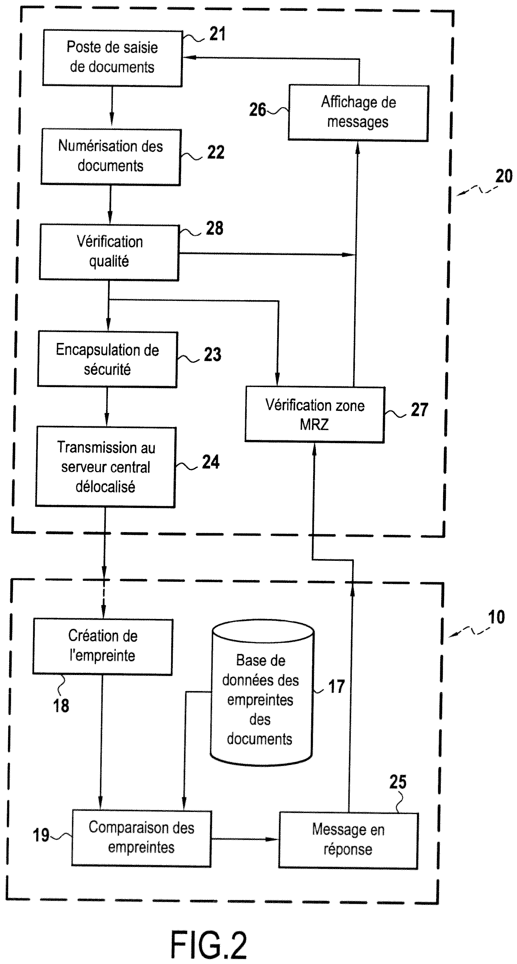

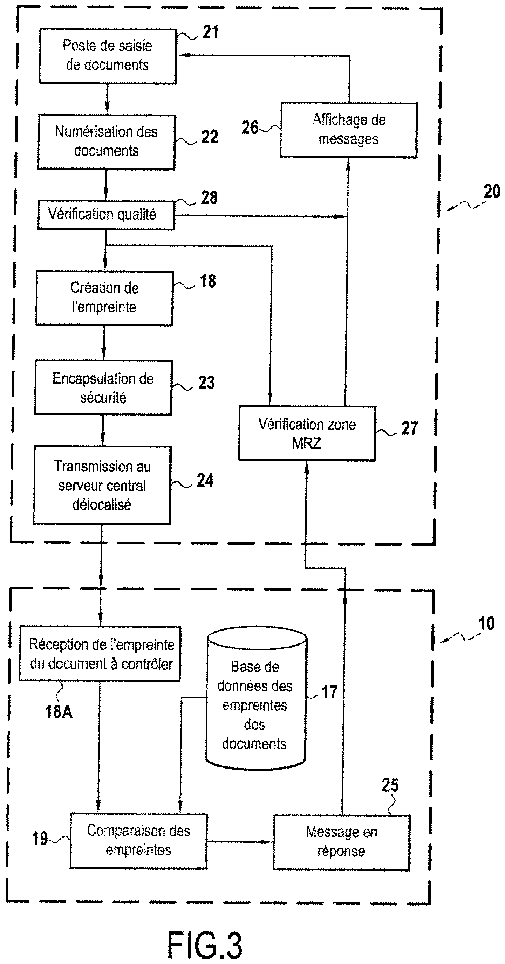

Comme représenté sur les Figures 2 et 3, un module de contrôle 20 comprend en premier lieu une unité 22 de numérisation du document à contrôler 5 (Figure 4).

Une unité 28 de vérification de la qualité des données du document numérisé permet l'émission d'un message d'erreur à destination du poste de saisie 21 en cas d'insuffisance de la qualité des données numérisées. Le processus de numérisation peut alors le cas échéant être réitéré avec plus de soin.

Dans le cas du mode de réalisation de la Figure 2, les données issues de la numérisation du document 5 à contrôler, après validation au niveau de l'unité 28, font l'objet d'une encapsulation de sécurité dans l'unité 23, puis sont transmises par une interface 24, de préférence sous forme cryptée, par exemple par une connexion Internet, au serveur central 10 qui peut se trouver dans un endroit éloigné à la fois de la base de données primaire 12 et du poste de contrôle 20.

Le serveur central 10, dans le mode de réalisation de la Figure 2, comprend un module 18 de création d'empreinte, qui peut être analogue au module 18 utilisé par la phase d'acquisition et de création de la base de données d'empreintes 17, mais met de préférence en outre en oeuvre un prétraitement, comme cela sera indiqué plus loin, pour tenir compte des défauts éventuels introduits lors de l'étape de numérisation.

L'empreinte calculée dans le module 18 pour le document à contrôler 5 numérisé est comparée à l'empreinte originale du document qui, dans la base de données d'empreintes 17, porte le même numéro de référence.

Suite à la comparaison effectuée dans l'unité 19, un message de réponse est élaboré dans l'unité 25 pour être renvoyé au poste de saisie 21.

Le mode de réalisation de la Figure 3 montre une variante dans laquelle les données du document 5 à contrôler numérisé sont d'abord soumises au module 18 de création d'empreinte, situé au niveau du poste de contrôle 20, au voisinage du poste de saisie 21, puis l'empreinte calculée dans ce module 18 fait l'objet d'une encapsulation de sécurité dans l'unité 23 pour être ensuite transmise, de préférence de façon cryptée, par l'interface 24 de transmission, par exemple par le réseau Internet, vers le serveur central 10.

Les données d'une empreinte étant parfaitement anonymes, même en cas de cryptage défaillant, il n'existe dans ce cas aucun risque de rupture de confidentialité.

Au niveau du serveur 10, l'unité 18A ayant reçu l'empreinte du document à contrôler, fournit cette empreinte au circuit de comparaison 19 analogue à celui de la Figure 2. Un message en réponse est élaboré de la même façon que dans le mode de réalisation de la Figure 2, dans l'unité 25.

Du fait qu'une base de données d'empreintes 17 est beaucoup moins volumineuse qu'une base de données primaire 12 et ne fait pas apparaître de données nominatives, et du fait que le calcul d'empreintes et la comparaison de deux empreintes peuvent facilement être réalisés à l'aide d'un micro-ordinateur, selon un mode de réalisation particulier, l'ensemble du serveur central 10 peut être déporté ou dupliqué pour être associé au poste de contrôle 20 auprès du poste de saisie 21 des documents à contrôler. Dans ce cas, l'interface 24 est simplifiée et l'unité 23 d'encapsulation de sécurité peut également être omise. La base de données primaire 12 qui contient toutes les données nominatives sensibles reste dans son emplacement d'origine et ne coopère avec un serveur central 10 que pour les opérations de mise à jour de la base de données d'empreintes 17 lors de l'enrôlement de nouvelles personnes demandant un document d'identité.

La Figure 4 montre le principe de l'extraction d'attributs discriminants d'un document d'identité 5. Dans cet exemple, le document d'identité 5 est divisé en trois zones caractérisables qui sont les attributs discriminants du document.

Un ensemble de zones 1 comprend des données textuelles variables, qui comprennent des textes biométriques comprenant explicitement notamment l'identité de la personne et la validité du document (comme par exemple le nom, les prénoms, le sexe, la nationalité, la date de naissance, la durée de validité,...), un ensemble de zones 2 comprenant des images, (telles que la photographie d'identité représentant un visage, la signature, un logo, un hologramme...) et une zone 3 dite MRZ contenant des informations lisibles par machine, cette troisième zone étant optionnelle.

Le dispositif 40 d'extraction d'attributs discriminants du document 5 comprend essentiellement un module 41 d'extraction et de lecture des zones de texte variable, qui opère sur tout ou partie des zones 1, un module 42 d'extraction des zones images, qui opère sur tout ou partie des zones 2 et un module 43 d'extraction et de lecture de la zone 3 dite MRZ. Un module 44 effectue le calcul d'empreintes à partir des informations fournies par les modules 41 et 42 tandis que l'information issue du module 43 peut directement être utilisée dans un module 45 pour effectuer une vérification qui peut constituer un premier niveau de vérification, avant la prise en compte des zones 1 et 2, mais peut également permettre une vérification de la cohérence des données entre les zones 1 et 3. Dans les modes de réalisation illustrés sur les Figures 2 et 3, l'unité de vérification de la zone MRZ qui regroupe les fonctionnalités précitées est référencée 27 et délivre des messages qui sont pris en compte par l'unité d'affichage 26 pour délivrer un message au niveau du poste de saisie 21.

Le système selon l'invention repose sur des techniques avancées de reconnaissance de caractères et d'images, mais relativement peu gourmandes en calculs, du fait de la sélection de zones particulières du document à authentifier et non du document dans sa globalité.

Le calcul de l'empreinte graphique multicomposantes se fait à partir d'un nombre de points de référence relevés dans le document au niveau des éléments graphiques variables (photographie d'identité, signature, ou divers objets graphiques apposés sur le document identifiant sa provenance, ainsi que les différents champs caractérisables d'un document, à savoir par exemple le nom et le prénom, la date de validité,...) et garantit ainsi la sécurisation des données personnelles. Il est en effet impossible de remonter aux informations relatives au porteur du document à partir de l'empreinte calculée.

Comme cela a été indiqué précédemment, le logiciel de calcul des empreintes et de comparaison de celles-ci est hébergé sur un serveur central 10. Lorsque celui-ci est délocalisé par rapport au poste 21 de saisie des documents à contrôler, des mécanismes de sécurisation tels que l'encapsulation des données et leur cryptage garantissent la protection lors du transfert de ces données entre le poste de contrôle 20 et le serveur central 10, mais comme indiqué plus haut, la technique des empreintes empêche toute reconstitution des documents, dès lors que la phase de contrôle s'effectue sans faire appel à la base de données primaire 12.

Par ailleurs, du fait que, lors du contrôle, la comparaison se fait document à document, c'est-à-dire que l'empreinte d'un document à contrôler est comparée avec la seule empreinte de la base de données d'empreintes correspondant au document d'identité de référence portant le même numéro de référence, le temps de réponse du système n'est que de quelques secondes, hormis le temps de transmission des informations qui est lié au débit disponible pour la liaison entre le poste de contrôle 20 et le serveur central 10. Une connexion Internet doit ainsi de préférence être une ligne numérique à paires asymétriques (ADSL).

L'unité de numérisation 22 du poste de contrôle 20 peut être constituée par un simple numériseur (scanner) compatible TWAIN disponible dans le commerce, de résolution minimale de 400 dpi.

Au moment de la vérification électronique d'identité, les informations relatives au document d'identité 5 à contrôler sont obtenues à partir de la numérisation de ce document. C'est pourquoi le poste de contrôle 20 comprend de préférence une unité 28 de vérification de la qualité des données numérisées afin de garantir une fiabilité maximale de l'authentification (Figures 2 et 3).

Cette étape de vérification comprend un ensemble de tests de qualité dont l'objectif est de répondre à la question : « les données reçues sont-elles exploitables ? »

Ces tests de qualité peuvent comprendre une vérification de la lecture avec reconnaissance optique de caractères des zones de texte, par exemple en examinant la validité du numéro du document numérisé.

Ces tests peuvent aussi comprendre une vérification de la bonne qualité des images en examinant la résolution ainsi que le degré de dégradation lié soit au matériel du scanner, soit au document lui-même.

Dans le cas où le document d'identité à contrôler 5 comprend une zone 3 de type MRZ, l'unité 27 de vérification de zone MRZ permet de localiser cette zone 3 à l'aide d'un algorithme simple d'analyse d'image et de repérage de symbole. Les données de cette zone 3 sont ensuite extraites et interprétées à l'aide d'un algorithme de reconnaissance de caractère du type OCR. Si la lecture de la zone 3 de type MRZ échoue, l'unité 27 envoie à l'interface utilisateur du poste de saisie 21, par l'intermédiaire de l'unité d'émission de messages 26, un message stipulant cette erreur de lecture.

Dans l'unité 14 d'extraction d'informations textuelles variables, qui est un sous-ensemble du module 18 de création d'une empreinte (Figures 1, 2 et 3) et correspond au module 41 de la Figure 4, tout ou partie des données textuelles caractérisables présentes dans les zones 1 du document d'identité 5 numérisé à contrôler sont extraites en utilisant un algorithme de reconnaissance de caractère. Cet algorithme, dans le cadre de la phase de contrôle, intègre de préférence une phase de prétraitement qui tient compte de la possible détérioration du document due à la numérisation, à des photocopies répétées, à de légères rotations au moment de l'acquisition ou encore à l'usure naturelle du document d'identité 5.

Les données textuelles variables extraites des zones 1 du document peuvent être ajoutées à l'empreinte sous une forme codée par exemple grâce à un algorithme de type MD5. Une telle technique de codage garantit la sécurité tout en empêchant de remonter aux informations d'origine. Par ailleurs, elle permet de s'assurer lors du contrôle que les données n'ont pas été modifiées.

Les données textuelles extraites des zones 1 peuvent servir à vérifier si elles correspondent bien à des données correspondantes stockées dans la zone 3 de type MRZ. Cette vérification supplémentaire effectuée au niveau de l'unité de vérification 27 des Figures 2 et 3 contribue ainsi au renforcement de la vérification et à la détection à ce niveau d'éventuelles falsifications, et accroît la fiabilité par rapport à des systèmes de sécurité n'effectuant un contrôle qu'à l'aide de la zone 3 de type MRZ.

L'empreinte multicomposantes du document à contrôler 5, qui comprend les données textuelles codées extraites de certaines au moins des zones 1, comprend en outre des composantes d'empreinte graphique qui sont obtenues à partir des zones 2 d'images repérées par un algorithme simple d'analyse d'image.

Le calcul des composantes de l'empreinte graphique prenant en compte les zones 2 d'image est effectué dans les unités 15, 16 du module 18 et sera explicité en référence à la Figure 5.

Les zones 2 d'image sont généralement composées de photographies, logos, hologrammes ou similaires et constituent des éléments graphiques. On peut extraire et analyser toute information pertinente contenue dans ces éléments graphiques et susceptible d'être utilisée pour l'authentification, telle que le sigle particulier d'un pays, les caractéristiques de la photo (forme du visage, chevelure, lunettes, couleur de la peau,...). A l'issue de cette étape, chaque élément graphique est représenté par une empreinte multicomposantes, chaque composante de l'empreinte contribuant à un degré différent de vérification au moment de l'authentification.

On décrira ci-dessous à titre d'exemple le calcul de l'empreinte d'une zone 2 constituée par une photographie de visage. L'objectif étant de détecter toute falsification, la photographie est analysée de façon hiérarchique, de la photo globale à une subdivision plus fine définie par des blocs de taille fixe. On peut ainsi distinguer une approche globale (unité 52 de la Figure 5) et une approche semi-locale, par blocs (unité 54 de la Figure 5).

Afin de nettoyer la photo de tous bruits émanant de la phase de numérisation, on effectue une étape de prétraitement dans une unité 51 qui utilise différents filtres bien connus dans le domaine du traitement d'images : par exemple filtre médian, égalisation d'histogramme, normalisation centrée-réduite, l'objectif étant d'obtenir une image la plus nette possible selon le type de bruits traités.

A l'issue de l'étape de prétraitement de l'unité 51, on procède dans l'unité 52 au calcul de la composante globale de l'empreinte proprement dite en considérant la photographie dans sa globalité. Afin d'être invariant aux changements de contrastes ou aux bruits éventuels qui peuvent altérer la photo, on caractérise l'image module du gradient 2A au lieu de l'image 2 elle-même.

Le module du gradient ou image gradient fait apparaître des détails de contours qui peuvent être caractérisés par une approche basée sur les moments de Zernike d'ordre supérieur. Les moments de Zernike sont calculés sur l'image gradient entière. Ils constituent ainsi le descripteur global de cet élément graphique.

L'étape 53 de calcul de descripteurs géométriques dans l'unité 52 comprend ainsi essentiellement une prise en compte des contours de l'image qui est l'élément le plus discriminant. Toutefois, à titre complémentaire, il est également possible de prendre en compte la couleur ou la texture de l'image pour élaborer la signature globale 56 ou composante globale de l'empreinte graphique.

Un descripteur géométrique global ne suffit pas pour détecter une éventuelle falsification bien localisée, par exemple si elle est située sur une petite surface de la photo. Pour remédier à ce problème, dans l'unité 54, on utilise une image binarisée 2B et on procède à une subdivision de la photographie en un nombre N de blocs avec recouvrement de dimension fixe (voir l'image 2C). Cette subdivision est faite de façon à respecter les caractéristiques du visage humain, en tenant compte notamment de la symétrie de la face et de la notion de zones caractéristiques du visage qui sont les zones les plus discriminantes comme les yeux, le nez, la bouche.

L'utilisation d'une image binarisée 2B permet de mieux traiter toute modification faite sur la photo, aussi petite soit-elle. Dans des documents d'identité 5 à contrôler, il existe un risque que le document à contrôler ait subi une certaine usure naturelle et le processus de numérisation est à même d'introduire certains défauts. Aussi la binarisation doit être faite de telle sorte que toute dégradation possible de la photo soit mieux tolérée. Selon un aspect de l'invention, à titre préférentiel, on utilise pour cela deux niveaux de traitement, à savoir une approche de détection de contours multi-échelles et un seuillage adaptatif adapté pour parfaire la binarisation.

L'étape 55 de calcul des descripteurs géométriques pour l'unité 54 met en oeuvre pour les N blocs binarisés le calcul des descripteurs de forme tels que par exemple les moments géométriques. L'ordre est choisi élevé de manière à caractériser tous les détails possibles. A titre d'exemple, on peut choisir un ordre supérieur ou égal à 12 pour obtenir des résultats satisfaisants au niveau des N signatures locales 57 correspondant aux N blocs et constituant les composantes locales de l'empreinte graphique.

L'unité d'affichage de message 26 permet de retourner au niveau du poste de saisie 21 du poste de contrôle 20 une réponse échelonnée qui permet au vérificateur de comprendre rapidement ce qui se passe en cas de problème.

Ainsi, l'unité d'affichage 26 peut émettre un message d'erreur issu de l'unité 28 de vérification de la qualité si les données reçues de l'unité 22 de numérisation sont inexploitables, par exemple par suite d'un problème de qualité du numériseur (scanner). Le message d'erreur peut alors suggérer à l'utilisateur de réitérer la numérisation.

L'unité d'affichage 26 peut également transmettre un message d'erreur suite à la vérification de la zone 3 de type MRZ par l'unité de vérification 27.

L'unité d'affichage 26 relaye également le message en réponse élaboré par l'unité 25 du serveur central 10 qui peut indiquer que le document à contrôler est authentifié ou au contraire peut contenir une indication de la zone du document à contrôler qui pose problème dans le cas où le document est indiqué comme faux ou encore peut signaler qu'il y a un doute sur un des éléments et que le système ne peut pas décider.

Le système de contrôle automatique de l'authenticité d'un document d'identité selon l'invention détecte ainsi toute tentative de falsification opérée sur le document, allant d'une simple modification des zones 1 de texte (par exemple par grattage ou réécriture d'un élément dans une zone 1 de texte) jusqu'aux éléments graphiques images à des emplacements différents (par exemple tentative de décollement de lamina, modification de la photographie, falsification des hologrammes,...).

L'unité 26 d'affichage de message peut constituer une interface utilisateur combinée au poste 21 de saisie de documents.

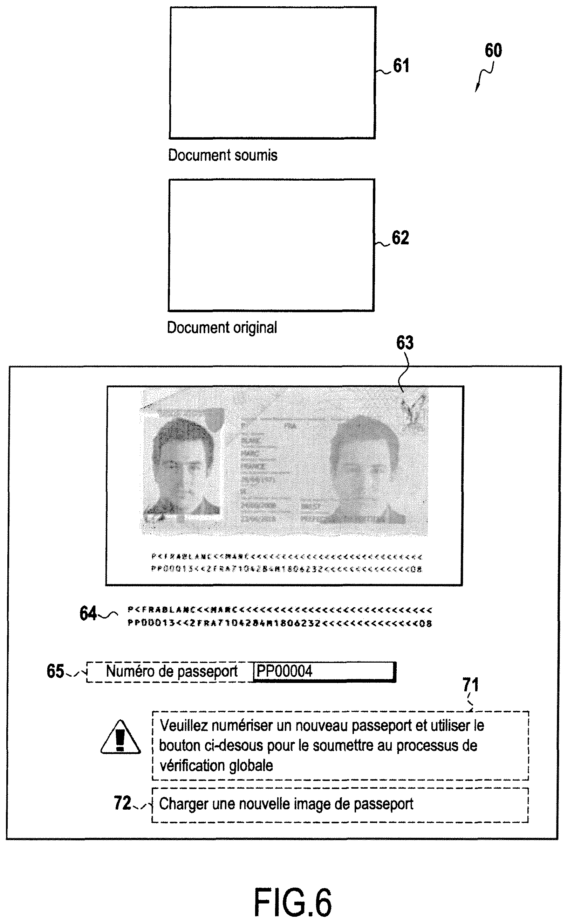

La Figure 6 montre un exemple possible d'une interface utilisateur 60 incluant la fonction de l'unité 26 d'affichage de message.

L'interface utilisateur 60 peut comprendre un espace 61 d'affichage du document soumis 5 à contrôler après numérisation et un espace 62 d'affichage du document de référence correspondant reconstitué à partir des informations issues de la base de données d'empreintes 17.

L'interface utilisateur 60 peut encore comprendre un espace d'affichage 63 de plus grandes dimensions que l'espace 61 d'affichage du document soumis 5, ainsi qu'un espace spécial 64 d'affichage de la zone 3 du type MRZ du document d'identité, lorsque celle-ci existe, telle qu'elle apparaît après reconnaissance par l'unité de vérification 27.

L'interface utilisateur 60 peut encore comprendre une zone 65 d'affichage de données particulières d'identification, telles que le numéro du document d'identité, des zones d'affichage de messages telles que la zone 71 et le cas échéant des boutons de commande tels que la touche 72.

Sur la Figure 6, on a représenté à titre d'exemple une touche 72 de chargement d'une nouvelle image de passeport et un message 71 se lisant comme suit :
« Veuillez numériser un nouveau passeport et utiliser le bouton ci-dessous pour le soumettre au processus de vérification globale ».

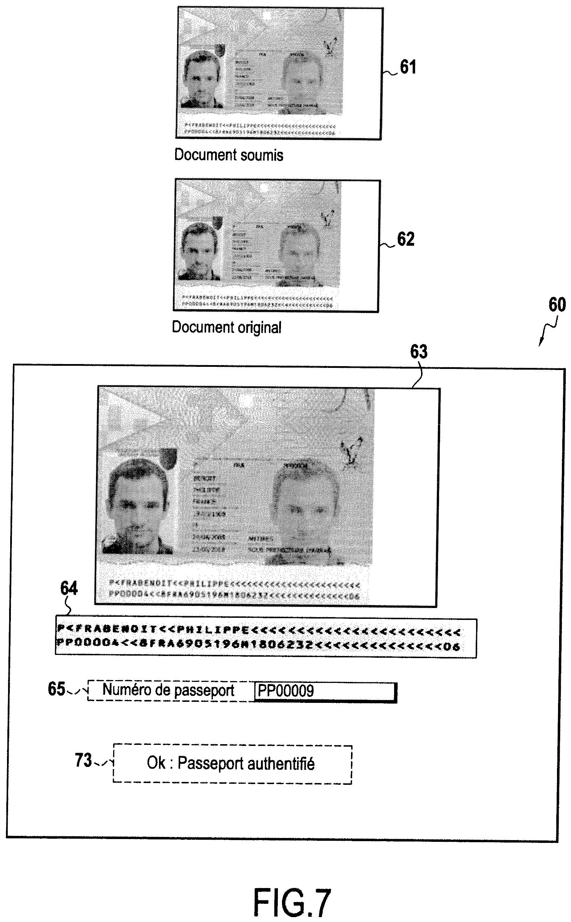

La Figure 7 montre un exemple d'interface utilisateur 60 dans le cas d'un document authentifié. Dans ce cas les deux images du document soumis 5 et du document de référence apparaissent respectivement dans les espaces 61 et 62 et un message 73 s'affiche avec à titre d'exemple la mention : « OK : Passeport authentifié ».

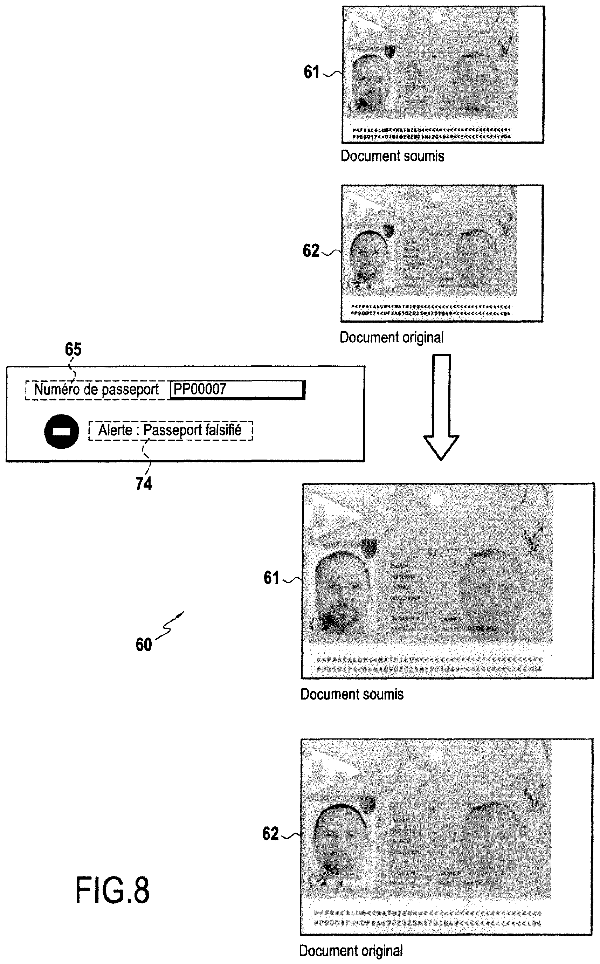

La Figure 8 montre un exemple d'interface utilisateur 60 dans le cas d'un document falsifié non authentifié parce que la photographie d'identité a été reconnue non valide. Les deux images du document soumis 5 et du document de référence apparaissent respectivement dans les espaces 61 et 62 et un message d'alerte 74 s'affiche avec à titre d'exemple la mention : « Alerte : Passeport falsifié ».

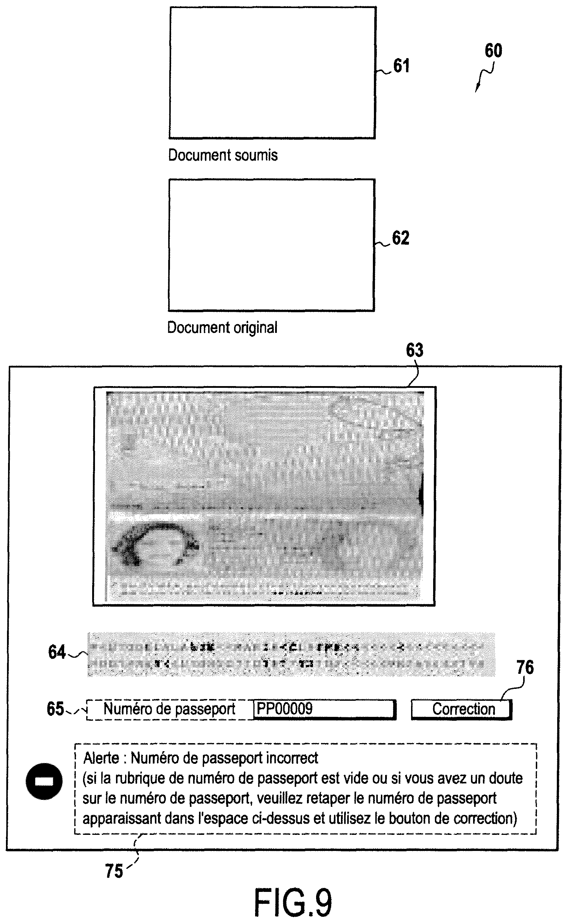

La Figure 9 montre un exemple d'interface utilisateur 60 dans le cas d'un document dont le numéro affiché dans l'espace 65 n'a pas été reconnu valide. A ce stade initial d'une vérification, les deux images du document soumis 5 et du document de référence n'apparaissent pas encore dans les espaces 61 et 62. Un message d'alerte 75 s'affiche avec à titre d'exemple la mention : « Alerte : Numéro de Passeport incorrect (si la rubrique de numéro de passeport est vide ou si vous avez un doute sur le numéro de passeport, veuillez retaper le numéro de passeport apparaissant dans l'espace ci-dessus et utilisez le bouton de correction) ». L'utilisateur peut alors utiliser le bouton de correction 76 et procéder à une nouvelle saisie du numéro de passeport affiché sur le document à contrôler qui sert à définir le document de référence à prendre en considération pour une opération de comparaison d'empreintes.

## Revendications

1. Procédé de contrôle automatique de l'authenticité d'un document d'identité (5) comprenant au moins une première zone (1) de données textuelles variables et au moins une deuxième zone (2) d'images, **caractérisé en ce qu'**il comprend :
(a) une phase d'acquisition de données, comprenant les étapes consistant à :
(a0) numériser un document d'identité (5) à la suite de sa création,
(a1) établir une base de données primaire (12) dans laquelle sont enregistrées au moins les informations contenues dans lesdites première zone (1) et deuxième zone (2), pour un ensemble de documents d'identité associés chacun à un numéro de référence,
(a2) extraire des données textuelles variables à partir des informations enregistrées dans la base de données primaire (12) pour la première zone (1) de chacun des documents d'identité par un procédé de reconnaissance optique de caractères et incorporer ces données textuelles sous une forme codée dans une signature numérique multicomposantes dénommée empreinte attribuée à chacun des documents d'identité, une empreinte comprenant des données textuelles codées et des composantes d'empreinte graphiques, les composantes d'empreinte graphiques comportant une composante globale d'empreinte et des composantes locales d'empreinte,
(a3) extraire des informations graphiques à partir des informations d'image enregistrées dans la base de données primaire (12) pour la deuxième zone (2) de chacun des documents d'identité et créer au moins une composante globale d'empreinte obtenue à partir d'une image gradient entière de ladite image et au moins une pluralité de composantes locales d'empreinte obtenues à partir d'un nombre prédéterminé N de blocs correspondant à des subdivisions d'une image binarisée de ladite image avec recouvrement de dimension fixe, pour chacun des documents d'identité, et
(a4) enregistrer les empreintes des divers documents d'identité dans une base de données d'empreintes (17) associée à un serveur central (10) délocalisé par rapport à la base de données primaire (12), les empreintes étant indexées suivant un numéro de référence du document d'identité qui lui est propre, et
(b) une phase de contrôle délocalisé de documents d'identité à contrôler dans un poste de contrôle en communication avec un serveur central (10) comprenant les étapes consistant à :
(b1) numériser un document d'identité (5) à contrôler,
(b2) extraire et lire à l'aide d'un procédé de reconnaissance optique de caractères les données textuelles variables contenues dans une première zone (1) du document d'identité à contrôler (5) numérisé et coder lesdites données pour constituer une composante d'une empreinte,
(b3) extraire des informations graphiques de l'image contenue dans une deuxième zone (2) du document d'identité à contrôler (5) numérisé et créer une composante globale d'empreinte obtenue à partir d'une image gradient entière ainsi qu'une pluralité de composantes locales d'empreintes obtenues à partir d'un nombre prédéterminé N de blocs correspondant à des subdivisions d'une image binarisée avec recouvrement de dimension fixe,
(b4) l'empreinte ayant été émise vers le serveur central ou les étapes b2 et b3 ayant été réalisées au sein du serveur central après que le document d'identité numérisé a été transmis au serveur central, comparer au sein dudit serveur central (10) l'empreinte du document d'identité à contrôler (5) avec l'empreinte du document d'identité indexé dans la base de données d'empreintes (17) avec le même numéro de référence, et
(b5) émettre un message indiquant le résultat de la comparaison et confirmant l'authenticité du document à contrôler (5) ou au contraire identifiant au moins une zone d'image (1, 2) considérée comme douteuse ou comme ayant été falsifiée.

2. Procédé selon la revendication 1, **caractérisé en ce que** la phase de contrôle délocalisé comprend en outre une étape consistant à vérifier la qualité des données du document numérisé et à émettre un message d'erreur en cas de qualité insuffisante de ces données numérisées.

3. Procédé selon la revendication 1 ou la revendication 2, appliqué au contrôle automatique de l'authenticité d'un document d'identité (5) comprenant en outre au moins une troisième zone (3) d'informations lisibles par machine, **caractérisé en ce que** la phase de contrôle délocalisé des documents d'identité comprend en outre une étape consistant à extraire et interpréter à l'aide d'un procédé de reconnaissance optique de caractères les données contenues dans une troisième zone (3) d'informations lisibles par machine du document d'identité à contrôler (5) et émettre un message d'erreur en cas d'erreur de lecture de cette troisième zone (3).

4. Procédé selon la revendication 3, **caractérisé en ce qu'**il comprend en outre une étape de vérification de la cohérence des données textuelles variables extraites de la première zone (1) du document d'identité à contrôler (5) et des données extraites de la troisième zone (3) d'informations lisibles par machine du document d'identité à contrôler (5).

5. Procédé selon l'une quelconque des revendications 1 à 4, **caractérisé en ce que** lors de l'étape b3) d'extraction des informations graphiques d'une image de la deuxième zone (2) du document d'identité à contrôler (5), on effectue un prétraitement comprenant des opérations de filtrage visant à nettoyer l'image des bruits parasites introduits lors de l'étape de numérisation du document d'identité à contrôler (5).

6. Procédé selon l'une quelconque des revendications 1 à 5, **caractérisé en ce que** lors de l'étape b2) d'extraction des données textuelles variables de la première zone (1) du document d'identité à contrôler (5), on effectue un prétraitement visant à corriger les défauts introduits lors de l'étape de numérisation du document d'identité à contrôler (5) ou inhérents à un vieillissement naturel de ce document.

7. Procédé selon l'une quelconque des revendications 1 à 6, **caractérisé en ce que** lors de l'étape d'extraction des informations graphiques de l'image de la deuxième zone (2) du document d'identité à contrôler (5), on calcule les moments de Zernike d'ordre supérieur de l'image gradient entière afin d'obtenir un descripteur global des informations graphiques pour créer ladite composante globale d'empreinte.

8. Procédé selon l'une quelconque des revendications 1 à 7, **caractérisé en ce que** lors de l'étape d'extraction des informations graphiques de l'image de la deuxième zone (2) du document d'identité à contrôler (5), la binarisation de l'image destinée à être subdivisée en un nombre prédéterminé N de blocs avec recouvrement de dimension fixe comprend un premier niveau de traitement par une détection de contours multi-échelles et un deuxième niveau de traitement par un seuillage adaptatif.

9. Procédé selon la revendication 8, **caractérisé en ce que** les composantes locales d'empreintes sont obtenues par le calcul de descripteurs de forme sur les N blocs de l'image binarisée avec un ordre supérieur ou égal à 12.

10. Procédé selon l'une quelconque des revendications 1 à 9, **caractérisé en ce que** l'étape b1) de numérisation d'un document d'identité (5) à contrôler est effectuée dans un poste de contrôle (20) distinct du serveur central (10) et **en ce que** le document numérisé audit poste de contrôle (20) est transmis au serveur central (10) par des moyens de télécommunication.

11. Procédé selon l'une quelconque des revendications 1 à 9, **caractérisé en ce que** l'étape b1) de numérisation d'un document d'identité (5) à contrôler est effectuée dans un poste de contrôle (20) distinct du serveur central (10), **en ce que** les étapes de création d'une empreinte du document d'identité (5) à contrôler sont effectuées au niveau du poste de contrôle (20) et **en ce que** l'empreinte du document d'identité à contrôler est transmise au serveur central (10) par des moyens de télécommunication.

12. Système de contrôle automatique de l'authenticité d'un document d'identité (5) comprenant au moins une première zone (1) de données textuelles variables et une deuxième zone (2) d'images, **caractérisé en ce qu'**il comprend :
(a) un module d'acquisition de données, comprenant :
(a1) une base de données primaire (12) dans laquelle sont enregistrées les informations contenues dans lesdites première zone (1) et deuxième zone (2), pour un ensemble de documents d'identité associés chacun à un numéro de référence,
(a2) une première unité (13, 14, 16) pour extraire de la base de données primaire (12) des données textuelles variables de la première zone (1) de chacun des documents d'identité par un procédé de reconnaissance optique de caractères et pour incorporer ces données textuelles sous une forme codée dans une signature numérique multicomposantes dénommée empreinte attribuée à chacun des documents d'identité, une empreinte comprenant des données textuelles codées et des composantes d'empreinte graphiques, les composantes d'empreinte graphiques comportant une composante globale d'empreinte et des composantes locales d'empreinte,
(a3) une deuxième unité (13, 15, 16) pour extraire de la base de données primaire (12) des informations graphiques de la deuxième zone (2) de chacun des documents d'identité et pour créer au moins une composante globale d'empreinte obtenue à partir d'une image gradient entière de ladite image et au moins une pluralité de composantes locales d'empreinte obtenues à partir d'un nombre prédéterminé N de blocs correspondant à des subdivisions d'une image binarisée de ladite image avec recouvrement de dimension fixe, pour chacun des documents d'identité, et
(a4) une unité (16) d'enregistrement des empreintes des divers documents d'identité dans une base de données d'empreintes (17) associée à un serveur central (10) délocalisé par rapport à la base de données primaire (12), les empreintes étant indexées suivant un numéro de référence du document d'identité qui lui est propre, et
(b) un module de contrôle (20) délocalisé des documents d'identité à contrôler comprenant :
(b1) une unité (22) de numérisation d'un document d'identité (5) à contrôler,
(b2) une troisième unité (18 ; 41) pour extraire et lire à l'aide d'un procédé de reconnaissance optique de caractères des données textuelles variables contenues dans une première zone (1) du document d'identité à contrôler (5) numérisé et pour coder lesdites données afin de constituer une composante d'une empreinte,
(b3) une quatrième unité (18 ; 42) pour extraire des informations graphiques de l'image contenue dans une deuxième zone (2) du document d'identité à contrôler (5) numérisé et comprenant des moyens (52) pour créer une composante globale d'empreinte obtenue à partir d'une image gradient entière ainsi que des moyens (54) de création d'une pluralité de composantes locales d'empreintes obtenues à partir d'un nombre prédéterminé N de blocs correspondant à des subdivisions d'une image binarisée avec recouvrement de dimension fixe,
(b4) une unité (19) de comparaison au sein du serveur central (10) de l'empreinte du document d'identité à contrôler (5) avec l'empreinte du document d'identité indexé dans la base de données d'empreintes (17) avec le même numéro de référence, et
(b5) une unité (25, 26) pour renvoyer un message indiquant le résultat de la comparaison et confirmant l'authenticité du document à contrôler (5) ou au contraire identifiant au moins une zone d'image (1, 2) considérée comme douteuse ou comme ayant été falsifiée.

13. Système selon la revendication 12, **caractérisé en ce qu'**il comprend en outre une unité (28, 26) de vérification de la qualité des données du document numérisé et d'émission d'un message d'erreur en cas de qualité insuffisante de ces données numérisées.

14. Système selon la revendication 12 ou la revendication 13, appliqué au contrôle automatique de l'authenticité d'un document d'identité (5) comprenant en outre au moins une troisième zone (3) d'informations lisibles par machine, **caractérisé en ce que** le module de contrôle délocalisé comprend en outre une unité de vérification (27) pour extraire et interpréter à l'aide d'un procédé de reconnaissance optique de caractères des données contenues dans une troisième zone (3) d'informations lisibles par machine du document d'identité à contrôler (5) et pour émettre un message d'erreur en cas d'erreur de lecture de cette troisième zone (3).

15. Système selon la revendication 14, **caractérisé en ce que** l'unité de vérification (27) comprend en outre des moyens pour vérifier la cohérence des données textuelles variables extraites de la première zone (1) du document d'identité à contrôler (5) et des données extraites de la troisième zone (3) d'informations lisibles par machine du document d'identité à contrôler (5).

16. Système selon l'une quelconque des revendications 12 à 15, **caractérisé en ce que** ladite quatrième unité (18 ; 42) d'extraction des informations graphiques de l'image de la deuxième zone (2) du document d'identité à contrôler (5) comprend une unité de prétraitement (51) pour effectuer des opérations de filtrage visant à nettoyer l'image des bruits parasites introduits lors de la numérisation du document d'identité à contrôler (5).

17. Système selon l'une quelconque des revendications 12 à 16, **caractérisé en ce que** ladite troisième unité (18, 41) d'extraction des données textuelles variables de la première zone (1) du document d'identité à contrôler (5) comprend une unité de prétraitement comprenant des moyens de correction des défauts introduits lors de l'étape de numérisation du document d'identité à contrôler (5) ou inhérents à un vieillissement naturel de ce document.

18. Système selon l'une quelconque des revendications 12 à 17, **caractérisé en ce que** lesdites troisième et quatrième unités (18 ; 41 et 18 ; 42) sont situées au niveau d'un poste (21) de saisie d'un document d'identité à contrôler (5) et **en ce que** ledit module de contrôle (20) délocalisé comprend une interface (24) de connexion Internet pour communiquer avec ledit serveur central (10) comprenant une unité (18A) de réception de l'empreinte du document d'identité à contrôler (5), ladite base de données (17) d'empreintes, ladite unité (19) de comparaison et ladite unité (25) de renvoi de message.

19. Système selon l'une quelconque des revendications 12 à 17, **caractérisé en ce que** lesdites troisième et quatrième unités (18 ; 41 et 18 ; 42) sont situées au niveau dudit serveur central (10) et **en ce que** ledit module de contrôle (20) délocalisé comprend une interface (24) de connexion Internet pour transmettre le document à contrôler (5) numérisé audit serveur central (10) comprenant lesdites troisième et quatrième unités (18 ; 41 et 18 ; 42) permettant la création de l'empreinte du document d'identité à contrôler (5) numérisé, ladite base de données (17) d'empreintes, ladite unité (19) de comparaison et ladite unité (25) de renvoi de message.

20. Système selon l'une quelconque des revendications 12 à 17, **caractérisé en ce que** ledit serveur central (10) comprenant lesdites troisième et quatrième unités (18 ; 41 et 18 ; 42) permettant la création de l'empreinte du document d'identité à contrôler (5) numérisé, ladite base de données (17) d'empreintes, ladite unité (19) de comparaison et ladite unité (25) de renvoi de message est situé géographiquement au niveau d'un poste (21) de saisie d'un document d'identité à contrôler (5) et délocalisé par rapport à ladite base de données primaire (12).

## Patentansprüche

1. Verfahren zur automatischen Überprüfung der Authentizität eines Ausweisdokuments (5), umfassend zumindest einen ersten Bereich (1) mit variablen Textdaten und zumindest einen zweiten Bereich (2) mit Bildern, **dadurch gekennzeichnet, dass** es umfasst:
(a) eine Datenerfassungsphase, umfassend die Schritte, bestehend aus:
(a0) Digitalisieren eines Ausweisdokuments (5) im Anschluss an seine Erstellung,
(a1) Einrichten einer primären Datenbank (12), in der zumindest die in dem ersten Bereich (1) und zweiten Bereich (2) enthaltenen Informationen für einen Satz an Ausweisdokumenten, denen jeweils eine Referenznummer zugewiesen ist, gespeichert werden,
(a2) Extrahieren von variablen Textdaten aus in der primären Datenbank (12) gespeicherten Informationen für den ersten Bereich (1) jedes der Ausweisdokumente über ein Verfahren zur optischen Zeichenerkennung und Integrieren dieser Textdaten in codierter Form in eine als Fingerabdruck bezeichnete digitale Mehrkomponentensignatur, die jedem der Ausweisdokumente zugewiesen ist, wobei ein Fingerabdruck codierte Textdaten und graphische Fingerabdruckkomponenten umfasst, wobei die graphischen Fingerabdruckkomponenten eine globale Fingerabdruckkomponente und lokale Fingerabdruckkomponenten einschließen,
(a3) Extrahieren von graphischen Informationen aus in der primären Datenbank (12) gespeicherten Bildinformationen für den zweiten Bereich (2) jedes der Ausweisdokumente und Erstellen von zumindest einer globalen Fingerabdruckkomponente, die aus einem gesamten Bildgradienten des Bildes erhalten wird, und zumindest einer Vielzahl von lokalen Fingerabdruckkomponenten, die aus einer zuvor festgelegten Anzahl N an Blöcken erhalten wird, die Untergliederungen eines unter Beibehaltung fester Abmessungen binarisierten Bildes des Bildes entsprechen, für jedes der Ausweisdokumente, und
(a4) Speichern der Fingerabdrücke verschiedener Ausweisdokumente in einer Fingerabdruckdatenbank (17), die mit einem zentralen Server (10) verbunden ist, der in Bezug auf die primäre Datenbank (12) ausgelagert ist, wobei die Fingerabdrücke gemäß einer Referenznummer des Ausweisdokuments, die ihm eigen ist, indexiert sind, und
(b) eine ausgelagerte Überprüfungsphase von zu überprüfenden Ausweisdokumenten an einer Überprüfungsstelle, die mit einem zentralen Server (10) in Kommunikation steht, umfassend die Schritte, bestehend aus:
(b1) Digitalisieren eines zu überprüfenden Ausweisdokuments (5),
(b2) Extrahieren und Lesen der variablen Textdaten, die in einem ersten Bereich (1) des digitalisierten zu überprüfenden Ausweisdokuments (5) enthalten sind, mittels eines Verfahrens zur optischen Zeichenerkennung und Codieren der Daten, um eine Fingerabdruckkomponente zu bilden,
(b3) Extrahieren von graphischen Informationen des Bildes, das in einem zweiten Bereich (2) des digitalisierten zu überprüfenden Ausweisdokuments (5) enthalten ist, und Erstellen einer globalen Fingerabdruckkomponente, die aus einem gesamten Bildgradienten erhalten wird, sowie einer Vielzahl von lokalen Fingerabdruckkomponenten, die aus einer zuvor festgelegten Anzahl N an Blöcken erhalten wird, die Untergliederungen eines unter Beibehaltung fester Abmessungen binarisierten Bildes entsprechen,
(b4) nach Senden des Fingerabdrucks in Richtung des zentralen Servers oder nach Umsetzen der Schritte b2 und b3 in dem zentralen Server, nachdem das digitalisierte Ausweisdokument an den zentralen Server übertragen wurde, Vergleichen des Fingerabdrucks des zu überprüfenden Ausweisdokuments (5) mit dem Fingerabdruck des in der Fingerabdruckdatenbank (17) indexierten Ausweisdokuments mit derselben Referenznummer in dem zentralen Server (10), und
(b5) Senden einer Nachricht, die das Ergebnis des Vergleichs angibt und die Authentizität des zu überprüfenden Dokuments (5) bestätigt oder im Gegenteil zumindest einen Bildbereich (1, 2) identifiziert, der als fragwürdig oder als gefälscht angesehen wird.

2. Verfahren nach Anspruch 1, **dadurch gekennzeichnet, dass** die ausgelagerte Überprüfungsphase ferner einen Schritt umfasst, der aus Verifizieren der Datenqualität des digitalisierten Dokuments und Senden einer Fehlernachricht im Falle unzureichender Qualität dieser digitalisierten Daten besteht.

3. Verfahren nach Anspruch 1 oder Anspruch 2, das auf die automatische Überprüfung der Authentizität eines Ausweisdokuments (5) angewandt wird, das ferner zumindest einen dritten Bereich (3) mit maschinenlesbaren Informationen umfasst, **dadurch gekennzeichnet, dass** die ausgelagerte Überprüfungsphase der Ausweisdokumente ferner einen Schritt umfasst, der aus Extrahieren und Interpretieren von in einem dritten Bereich (3) mit maschinenlesbaren Informationen des zu überprüfenden Ausweisdokuments (5) enthaltenen Daten mittels eines Verfahrens zur optischen Zeichenerkennung und Senden einer Fehlernachricht im Falle eines Fehlers beim Lesen dieses dritten Bereichs (3) besteht.

4. Verfahren nach Anspruch 3, **dadurch gekennzeichnet, dass** es ferner einen Schritt zum Verifizieren der Kohärenz der aus dem ersten Bereich (1) des zu überprüfenden Ausweisdokuments (5) extrahierten variablen Textdaten und der aus dem dritten Bereich (3) mit maschinenlesbaren Informationen des zu überprüfenden Ausweisdokuments (5) extrahierten Daten umfasst.

5. Verfahren nach einem der Ansprüche 1 bis 4, **dadurch gekennzeichnet, dass** im Schritt b3) zum Extrahieren von graphischen Informationen eines Bildes des zweiten Bereichs (2) des zu überprüfenden Ausweisdokuments (5) eine Vorverarbeitung durchgeführt wird, umfassend Filtervorgänge, die dazu dienen, das Bild von im Schritt zum Digitalisieren des zu überprüfenden Ausweisdokuments (5) eingebrachtem Bildrauschen zu befreien.

6. Verfahren nach einem der Ansprüche 1 bis 5, **dadurch gekennzeichnet, dass** im Schritt b2) zum Extrahieren von variablen Textdaten des ersten Bereichs (1) des zu überprüfenden Ausweisdokuments (5) eine Vorverarbeitung durchgeführt wird, die dazu dient, im Schritt zum Digitalisieren des zu überprüfenden Ausweisdokuments (5) eingebrachte oder einer natürlichen Alterung dieses Dokuments innewohnende Fehler zu korrigieren.

7. Verfahren nach einem der Ansprüche 1 bis 6, **dadurch gekennzeichnet, dass** im Schritt zum Extrahieren von graphischen Informationen des Bildes des zweiten Bereichs (2) des zu überprüfenden Ausweisdokuments (5) Zernike-Momente höherer Ordnung des gesamten Bildgradienten berechnet werden, um einen globalen Deskriptor der graphischen Informationen zur Erstellung der globalen Fingerabdruckkomponente zu erhalten.

8. Verfahren nach einem der Ansprüche 1 bis 7, **dadurch gekennzeichnet, dass** im Schritt zum Extrahieren von graphischen Informationen des Bildes des zweiten Bereichs (2) des zu überprüfenden Ausweisdokuments (5) die Binarisierung des Bildes, das in eine zuvor festgelegte Anzahl N an Blöcken unter Beibehaltung fester Abmessungen untergliedert werden soll, eine erste Verarbeitungsstufe mit einer Erfassung von multiskalaren Konturen und eine zweite Verarbeitungsstufe mit einer adaptiven Schwellwertbestimmung umfasst.

9. Verfahren nach Anspruch 8, **dadurch gekennzeichnet, dass** die lokalen Fingerabdruckkomponenten durch die Berechnung von Formdeskriptoren zu den N Blöcken des binarisierten Bildes mit einer Ordnung größer oder gleich 12 erhalten werden.

10. Verfahren nach einem der Ansprüche 1 bis 9, **dadurch gekennzeichnet, dass** Schritt b1) zum Digitalisieren eines zu überprüfenden Ausweisdokuments (5) an einer Überprüfungsstelle (20) getrennt von dem zentralen Server (10) durchgeführt wird und dass das digitalisierte Dokument an der Überprüfungsstelle (20) durch Telekommunikationsmittel an den zentralen Server (10) übertragen wird.

11. Verfahren nach einem der Ansprüche 1 bis 9, **dadurch gekennzeichnet, dass** Schritt b1) zum Digitalisieren eines zu überprüfenden Ausweisdokuments (5) an einer Überprüfungsstelle (20) getrennt von dem zentralen Server (10) durchgeführt wird, dass die Schritte zum Erstellen eines Fingerabdrucks des zu überprüfenden Ausweisdokuments (5) auf Höhe der Überprüfungsstelle (20) durchgeführt werden und dass der Fingerabdruck des zu überprüfenden Ausweisdokuments durch Telekommunikationsmittel an den zentralen Server (10) übertragen wird.

12. System zur automatischen Überprüfung der Authentizität eines Ausweisdokuments (5), umfassend zumindest einen ersten Bereich (1) mit variablen Textdaten und einen zweiten Bereich (2) mit Bildern, **dadurch gekennzeichnet, dass** es umfasst:
(a) ein Datenerfassungsmodul, umfassend:
(a1) eine primäre Datenbank (12), in der die in dem ersten Bereich (1) und zweiten Bereich (2) enthaltenen Informationen für einen Satz an Ausweisdokumenten, denen jeweils eine Referenznummer zugewiesen ist, gespeichert sind,
(a2) eine erste Einheit (13, 14, 16) zum Extrahieren von variablen Textdaten des ersten Bereichs (1) jedes der Ausweisdokumente aus der primären Datenbank (12) über ein Verfahren zur optischen Zeichenerkennung und zum Integrieren dieser Textdaten in codierter Form in eine als Fingerabdruck bezeichnete digitale Mehrkomponentensignatur, die jedem der Ausweisdokumente zugewiesen ist, wobei ein Fingerabdruck codierte Textdaten und graphische Fingerabdruckkomponenten umfasst, wobei die graphischen Fingerabdruckkomponenten eine globale Fingerabdruckkomponente und lokale Fingerabdruckkomponenten umfassen,
(a3) eine zweite Einheit (13, 15, 16) zum Extrahieren von graphischen Informationen des zweiten Bereichs (2) jedes der Ausweisdokumente aus der primären Datenbank (12) und zum Erstellen von zumindest einer globalen Fingerabdruckkomponente, die aus einem gesamten Bildgradienten des Bildes erhalten wird, und zumindest einer Vielzahl von lokalen Fingerabdruckkomponenten, die aus einer zuvor festgelegten Anzahl N an Blöcken erhalten wird, die Untergliederungen eines unter Beibehaltung fester Abmessungen binarisierten Bildes des Bildes entsprechen, für jedes der Ausweisdokumente, und
(a4) eine Einheit (16) zum Speichern der Fingerabdrücke verschiedener Ausweisdokumente in einer Fingerabdruckdatenbank (17), die mit einem zentralen Server (10) verbunden ist, der in Bezug auf die primäre Datenbank (12) ausgelagert ist, wobei die Fingerabdrücke gemäß einer Referenznummer des Ausweisdokuments, die ihm eigen ist, indexiert sind, und
(b) ein ausgelagertes Überprüfungsmodul (20) von zu überprüfenden Ausweisdokumenten, umfassend:
(b1) eine Einheit (22) zum Digitalisieren eines zu überprüfenden Ausweisdokuments (5),
(b2) eine dritte Einheit (18; 41) zum Extrahieren und Lesen der variablen Textdaten, die in einem ersten Bereich (1) des digitalisierten zu überprüfenden Ausweisdokuments (5) enthalten sind, mittels eines Verfahrens zur optischen Zeichenerkennung und zum Codieren der Daten, um eine Fingerabdruckkomponente zu bilden,
(b3) eine vierte Einheit (18; 42) zum Extrahieren von graphischen Informationen des Bildes, das in einem zweiten Bereich (2) des digitalisierten zu überprüfenden Ausweisdokuments (5) enthalten ist, und umfassend Mittel (52) zum Erstellen einer globalen Fingerabdruckkomponente, die aus einem gesamten Bildgradienten erhalten wird, sowie Mittel (54) zum Erstellen einer Vielzahl von lokalen Fingerabdruckkomponenten, die aus einer zuvor festgelegten Anzahl N an Blöcken erhalten wird, die Untergliederungen eines unter Beibehaltung fester Abmessungen binarisierten Bildes entsprechen,
(b4) eine Einheit (19) zum Vergleichen des Fingerabdrucks des zu überprüfenden Ausweisdokuments (5) mit dem Fingerabdruck des in der Fingerabdruckdatenbank (17) indexierten Ausweisdokuments mit derselben Referenznummer in dem zentralen Server (10), und
(b5) eine Einheit (25, 26) zum Senden einer Nachricht, die das Ergebnis des Vergleichs angibt und die Authentizität des zu überprüfenden Dokuments (5) bestätigt oder im Gegenteil zumindest einen Bildbereich (1, 2) identifiziert, der als fragwürdig oder als gefälscht angesehen wird.

13. System nach Anspruch 12, **dadurch gekennzeichnet, dass** es ferner eine Einheit (28, 26) zum Verifizieren der Datenqualität des digitalisierten Dokuments und zum Senden einer Fehlernachricht im Falle unzureichender Qualität dieser digitalisierten Daten umfasst.

14. System nach Anspruch 12 oder Anspruch 13, das auf die automatische Überprüfung der Authentizität eines Ausweisdokuments (5) angewandt wird, das ferner zumindest einen dritten Bereich (3) mit maschinenlesbaren Informationen umfasst, **dadurch gekennzeichnet, dass** das ausgelagerte Überprüfungsmodul ferner eine Verifizierungseinheit (27) zum Extrahieren und Interpretieren der in einem dritten Bereich (3) mit maschinenlesbaren Informationen enthaltenen Daten des zu überprüfenden Ausweisdokuments (5) mittels eines Verfahrens zur optischen Zeichenerkennung und zum Senden einer Fehlernachricht im Falle eines Fehlers beim Lesen dieses dritten Bereichs (3) umfasst.

15. System nach Anspruch 14, **dadurch gekennzeichnet, dass** die Verifizierungseinheit (27) ferner Mittel zum Verifizieren der Kohärenz der aus dem ersten Bereich (1) des zu überprüfenden Ausweisdokuments (5) extrahierten variablen Textdaten und der aus dem dritten Bereich (3) mit maschinenlesbaren Informationen des zu überprüfenden Ausweisdokuments (5) extrahierten Daten umfasst.

16. System nach einem der Ansprüche 12 bis 15, **dadurch gekennzeichnet, dass** die vierte Einheit (18; 42) zum Extrahieren von graphischen Informationen des Bildes des zweiten Bereichs (2) des zu überprüfenden Ausweisdokuments (5) eine Vorverarbeitungseinheit (51) umfasst, um Filtervorgänge umzusetzen, die dazu dienen, das Bild von bei der Digitalisierung des zu überprüfenden Ausweisdokuments (5) eingebrachtem Bildrauschen zu befreien.

17. System nach einem der Ansprüche 12 bis 16, **dadurch gekennzeichnet, dass** die dritte Einheit (18, 41) zum Extrahieren von variablen Textdaten des ersten Bereichs (1) des zu überprüfenden Ausweisdokuments (5) eine Vorverarbeitungseinheit umfasst, die Mittel zum Korrigieren von im Schritt zum Digitalisieren des zu überprüfenden Ausweisdokuments (5) eingebrachten oder einer natürlichen Alterung dieses Dokuments innewohnenden Fehlern umfasst.

18. System nach einem der Ansprüche 12 bis 17, **dadurch gekennzeichnet, dass** sich die dritte und vierte Einheit (18; 41 und 18; 42) auf Höhe einer Erfassungsstelle (21) für ein zu überprüfendes Ausweisdokument (5) befinden und dass das ausgelagerte Überprüfungsmodul (20) eine Schnittstelle (24) zur Verbindung mit dem Internet umfasst, um mit dem zentralen Server (10) zu kommunizieren, der eine Empfangseinheit (18A) für den Fingerabdruck des zu überprüfenden Ausweisdokuments (5), die Fingerabdruckdatenbank (17), die Vergleichseinheit (19) und die Einheit (25) zum Senden von Nachrichten umfasst.

19. System nach einem der Ansprüche 12 bis 17, **dadurch gekennzeichnet, dass** sich die dritte und vierte Einheit (18; 41 und 18; 42) auf Höhe des zentralen Servers (10) befinden und dass das ausgelagerte Überprüfungsmodul (20) eine Schnittstelle (24) zur Verbindung mit dem Internet umfasst, um das digitalisierte zu überprüfende Dokument (5) an den zentralen Server (10) zu übertragen, der die dritte und vierte Einheit (18; 41 und 18; 42), die das Erstellen des Fingerabdrucks des digitalisierten zu überprüfenden Ausweisdokuments (5) ermöglichen, die Fingerabdruckdatenbank (17), die Vergleichseinheit (19) und die Einheit (25) zum Senden von Nachrichten umfasst.

20. System nach einem der Ansprüche 12 bis 17, **dadurch gekennzeichnet, dass** sich der zentrale Server (10), der die dritte und vierte Einheit (18; 41 und 18; 42), die das Erstellen des Fingerabdrucks des digitalisierten zu überprüfenden Ausweisdokuments (5) ermöglichen, die Fingerabdruckdatenbank (17), die Vergleichseinheit (19) und die Einheit (25) zum Senden von Nachrichten umfasst, geographisch auf Höhe einer Erfassungsstelle (21) für ein zu überprüfendes Ausweisdokument (5) befindet und in Bezug auf die primäre Datenbank (12) ausgelagert ist.

## Claims

1. A process for automatic checking of the authenticity of an identity document (5) comprising at least one first zone (1) of variable textual data and at least one second image zone (2), **characterised in that** it comprises :
(a) a data-acquisition phase, comprising the steps consisting of:
(a0) digitising an identity document (5) after its creation,
(a1) setting up a primary database (12) in which at least the information contained in said first zone (1) and second zone (2) for a set of identity documents each indexed according to a reference number is recorded,
(a2) extracting variable textual data from the information recorded in the primary database (12) for the first zone (1) of each of the identity documents via a process of optical character recognition and incorporating these textual data in coded form into a multicomponent digital signature called a fingerprint attributed to each of the identity documents, a fingerprint comprising coded textual data and graphic fingerprint components, said graphic fingerprint components comprising a global fingerprint component and local fingerprint components,
(a3) extracting graphic information from the image information recorded in the primary database (12) for the second zone (2) of each of the identity documents and creating at least one global fingerprint component obtained from an entire image gradient fo said image and at least one plurality of local fingerprint components obtained from a predetermined number N of blocks corresponding to subdivisions of a binarised image of said image with covering of fixed dimension, for each of the identity documents, and
(a4) recording the fingerprints of various identity documents in a fingerprint database (17) linked to a central server (10) relocated relative to the primary database (12), the fingerprints being indexed according to a reference number of the relevant identity document, and
(b) a relocated checking phase of identity documents to be checked in a checkpoint in communication with a central server (10) comprising the steps consisting of :
(b1) scanning an identity document (5) to be checked,
(b2) extracting and reading by means of a process of optical character recognition the variable textual data contained in a first zone (1) of the digitised identity document to be checked (5) and coding said data to constitute a fingerprint component,
(b3) extracting graphic information of the image contained in a second zone (2) of the digitised identity document to be checked (5) and creating a global fingerprint component obtained from an entire image gradient as well as a plurality of local fingerprint components obtained from a predetermined number N of blocks corresponding to subdivisions of a binarised image with covering of fixed dimension,
(b4) the fingerprint having been emitted to the central server or the steps b1 and b2 having been realised in the central server after the digitised identity document has been transmitted to the central server, comparing inside said central server (10) the fingerprint of the identity document to be checked (5) with the fingerprint of the identity document indexed in the fingerprint database (17) with the same reference number, and
(b5) sending a message indicating the result of the comparison and confirming the authenticity of the document to be checked (5) or on the contrary identifying at least one image zone (1, 2) considered as suspect or as having been falsified.

2. The process as claimed in Claim 1, **characterised in that** the relocated checking phase also comprises a step consisting of verifying the quality of the data of the digitised document and sending an error message in case of insufficient quality of these digitised data.

3. The process as claimed in Claim 1 or Claim 2, applied to the automatic checking of the authenticity of an identity document (5) also comprising at least one third zone (3) of machine-readable information, **characterised in that** the relocated checking phase of the identity documents also comprises a step consisting of extracting and interpreting by means of a process of optical character recognition the data contained in a third zone (3) of machine-readable information of the identity document to be checked (5) and sending an error message in case of reading error of this third zone (3).

4. The process as claimed in Claim 3, **characterised in that** it also comprises a verification step of the coherence of the variable textual data extracted from the first zone (1) of the identity document to be checked (5) and of the data extracted from the third zone (3) of machine-readable information of the identity document to be checked (5).

5. The process as claimed in any one of Claims 1 to 4, **characterised in that** during extraction step b3) of the graphic information of an image of the second zone (2) of the identity document to be checked (5) pre-processing is carried out comprising filtering operations aimed at cleaning the image of parasite noises introduced during the digitising step of the identity document to be checked (5).

6. The process as claimed in any one of Claims 1 to 5, **characterised in that** during extraction step b2) of the variable textual data of the first zone (1) of the identity document to be checked (5), pre-processing is carried out aimed at correcting the defects introduced during the digitising step of the identity document to be checked (5) or inherent to natural ageing of this document.

7. The process as claimed in any one of Claims 1 to 6, **characterised in that** during extraction step of the graphic information of the image of the second zone (2) of the identity document to be checked (5) the higher-order Zernike moments of the entire image gradient are calculated to obtain a global descriptor of graphic information to create said global fingerprint component.

8. The process as claimed in any one of Claims 1 to 7, **characterised in that** during the extraction step of the graphic information of the image of the second zone (2) of the identity document to be checked (5), the binarisation of the image intended to be subdivided into a predetermined number N of blocks with covering of fixed dimension comprises a first level of processing via detection of multi-scale contours and a second level of processing by an adaptive threshold.

9. The process as claimed in Claim 8, **characterised in that** the local fingerprint components are obtained by the calculation of form descriptors on the N blocks of the binarised image with an order greater than or equal to 12.

10. The process as claimed in any one of Claims 1 to 9, **characterised in that** the digitising step b1) of an identity document (5) to be checked is performed in a checkpoint (20) distinct from the central server (10) and **in that** the document digitised at said checkpoint (20) is transmitted to the central server (10) via telecommunication means.

11. The process as claimed in any one of Claims 1 to 9, **characterised in that** the digitising step b1) of an identity document (5) to be checked is performed in a checkpoint (20) distinct from the central server (10), **in that** the steps of creating a fingerprint of the identity document (5) to be checked are carried out at the level of the checkpoint (20) and **in that** the fingerprint of the identity document to be checked is transmitted to the central server (10) via telecommunication means.

12. A system for automatic checking of the authenticity of an identity document (5) comprising at least one first zone (1) of variable textual data and a second image zone (2), **characterised in that** it comprises :
(a) a data-acquisition module, comprising :
(a1) a primary database (12) in which the information contained in said first zone (1) and second zone (2) for a set of identity documents each indexed according to a reference number is recorded,
(a2) a first unit (13, 14, 16) for extracting from the primary database (12) the variable textual data of the first zone (1) of each of the identity documents via a process of optical character recognition and for incorporating these textual data in coded form into a multicomponent digital signature called a fingerprint attributed to each of the identity documents, a fingerprint comprising coded textual data and graphic fingerprint components, said graphic fingerprint components comprising a global fingerprint component and local fingerprint components,
(a3) a second unit (13, 15, 16) for extracting from the primary database (12) the graphic information of the second zone (2) of each of the identity documents and to create at least one global fingerprint component obtained from an entire image gradient of said image and at least a plurality of local fingerprint components obtained from a predetermined number N of blocks corresponding to subdivisions of a binarised image of said image with covering of fixed dimension, for each of the identity documents, and
(a4) a unit (16) for recording fingerprints of various identity documents in a fingerprint database (17) linked to a central server (10) relocated relative to the primary database (12), the fingerprints being indexed according to a reference number of the identity document specific to the latter, and
(b) a relocated control module (20) of identity documents to be checked comprising :
(b1) a digitising unit (22) of an identity document (5) to be checked,
(b2) a third unit (18 ; 41) for extracting and reading by means of a process of optical character recognition of the variable textual data contained in a first zone (1) of the digitised identity document to be checked (5) and for coding said data to constitute a fingerprint component,
(b3) a fourth unit (18 ; 42) for extracting graphic information from the image contained in a second zone (2) of the digitised identity document to be checked (5) and comprising means (52) to create a global fingerprint component obtained from an entire image gradient as well as means (54) for creating a plurality of local fingerprint components obtained from a predetermined number N of blocks corresponding to subdivisions of a binarised image with covering of fixed dimension,
(b4) a comparison unit (19) inside the central server (10) of the fingerprint of the identity document to be checked (5) with the fingerprint of the identity document indexed in the fingerprint database (17) with the same reference number, and
(b5) a unit (25, 26) for sending a message indicating the result of the comparison and confirming the authenticity of the document to be checked (5) or on the contrary identifying at least one image zone (1, 2) considered as suspect or as having been falsified.

13. The system as claimed in Claim 12, **characterised in that** it also comprises a verification unit (28, 26) of the quality of the data of the digitised document and sending of an error message in case of insufficient quality of these digitised data.

14. The system as claimed in Claim 12 or Claim 13, applied to the automatic checking of the authenticity of an identity document (5) also comprising at least one third zone (3) of machine-readable information, **characterised in that** the relocated control module also comprises a verification unit (27) for extracting and interpreting by means of a process of optical character recognition the data contained in a third zone (3) of machine-readable information of the identity document to be checked (5) and for sending an error message in case of reading error of this third zone (3).

15. The system as claimed in Claim 14, **characterised in that** the verification unit (27) also comprises means for verifying the coherence of the variable textual data extracted from the first zone (1) of the identity document to be checked (5) and the data extracted from the third zone (3) of machine-readable information of the identity document to be checked (5).

16. The system as claimed in any one of Claims 12 to 15, **characterised in that** said fourth extraction unit (18 ; 42) of the graphic information of the image of the second zone (2) of the identity document to be checked (5) comprises a pre-processing unit (51) for conducting filtering operations aimed at cleaning the image of parasite noises introduced during the digitising of the identity document to be checked (5).

17. The system as claimed in any one of Claims 12 to 16, **characterised in that** said third extraction unit (18, 41) of the variable textual data of the first zone (1) of the identity document to be checked (5) comprises a pre-processing unit comprising correction means of defects introduced during the digitising step of the identity document to be checked (5) or inherent to natural ageing of this document.

18. The system as claimed in any one of Claims 12 to 17, **characterised in that** said third and fourth units (18 ; 41 and 18 ; 42) are located at the level of a terminal (21) of an identity document to be checked (5) and **in that** said relocated control module (20) comprises an Internet connection interface (24) for communicating with said central server (10) comprising a receiving unit (18A) of the fingerprint of the identity document to be checked (5), said fingerprint database (17), said comparison unit (19) and said message-sending unit (25).

19. The system as claimed in any one of Claims 12 to 17, **characterised in that** said third and fourth units (18 ; 41 and 18 ; 42) are located at the level of said central server (10) and **in that** said relocated control module (20) comprises an Internet connection interface (24) for sending the digitised document to be checked (5) to said central server (10) comprising said third and fourth units (18 ; 41 and 18 ; 42) for creation of the fingerprint of the digitised identity document to be checked (5), said fingerprint database (17), said comparison unit (19) and said message-sending unit (25).

20. The system as claimed in any one of Claims 12 to 17, **characterised in that** said central server (10) comprising said third and fourth units (18 ; 41 and 18 ; 42) for creation of the fingerprint of the digitised identity document to be checked (5), said fingerprint database (17), said comparison unit (19) and said message-sending unit (25) is located geographically at the level of a terminal (21) of an identity document to be checked (5) and relocated relative to said primary database (12).
